# EUROPEAN PATENT SPECIFICATION

(11) **EP 3 892 759 B1**
(45) Date of publication and mention of the grant of the patent: **26.07.2023**
(21) Application number: 20168312.5
(22) Date of filing: 06.04.2020
(51) Int. Cl.: C25D 3/62, C25D 5/02, C25D 5/12, C25D 5/56, C25D 7/00, C23F 1/00, G06K 19/077, G06K 19/04, C23F 1/02, C23F 3/04

(54) **TAPE FOR ELECTRICAL CIRCUITS WITH ROSE-GOLD CONTACT PADS AND METHOD FOR MANUFACTURING SUCH A TAPE**
BAND FÜR ELEKTRISCHE SCHALTUNGEN MIT ROSEGOLD-KONTAKTPADS UND VERFAHREN ZUR HERSTELLUNG SOLCH EINES BANDES
BANDE POUR CIRCUITS ÉLECTRIQUES AVEC PLAQUETTES DE CONTACT ROSE-DORÉ ET PROCÉDÉ DE FABRICATION D'UNE TELLE BANDE

(43) Date of publication of application: 13.10.2021
(73) Proprietor: Linxens Holding, 78200 Mantes-la-Jolie (FR)
(72) Inventor: VENON, Florian, 78200 MANTES LA JOLIE (FR); COQUILLARD, Stéphanie, 78410 FLINS-SUR-SEINE (FR)
(74) Representative: INNOV-GROUP

(56) References cited:
- EP-A2- 1 728 898
- WO-A1-2014/064278
- WO-A1-2015/006414
- WO-A1-2019/051712
- DE-A1-102013 109 400
- US-A- 4 465 564

## Description

### Technical domain

The invention relates to electrical circuits with contact pads. For example, such electrical circuits are used for manufacturing modules for smart-cards, such modules comprising electrical contact pads designed to be connected to the connector of a smart-card reader (Such smart-cards are for example used for banking applications and identification documents).

### State of the art

Connector modules for smart-cards comprise a dielectric substrate supporting electrical contact pads (see for example the document WO2019051712A1). The electrical contact pads are etched in a conductive layer supported by a flexible dielectric substrate (e.g. by photolithography and etching technologies). Alternatively, the electrical contact pads are cut out in a conductive layer prior to be co-laminated on a flexible dielectric substrate (e.g. by a lead-frame technology). In both cases, contacts pads supported by a dielectric substate are produced as a flexible tape. More generally, this kind of flexible tapes with electrical circuits can be used for manufacturing the electrical contacts of connectors for memory keys or disks, etc. Thus, the electrical circuits produced in connection with the field of the invention are of particular interest when they are intended to be at least partially visible during their everyday use.

The invention is illustrated below in using the example of electrical circuits intended to form contacts of smart-card connectors, but this example should not be understood as being restrictive, since in general, the deposition process described below can be applied to any type of metallic conductive support. As far as deposition of metal layers is concerned, one can refer for example to the following patent literature: DE102013109400A1, US4465564A, EP1728898A2, WO2015/006414 A1. In the smart-card domain, card manufacturers wish to match the color of card bodies with the color of the card modules. For example, for aesthetic and/or customization purposes, it would be suitable to have electrical contact pads having a so-called "Rose Gold" color (i.e. pink-gold color) on the visible face of the module. However, producing the electrical contact pads with a new color must not call into question their quality, for example, in terms of electrical contact resistance, resistance to climatic tests, resistance to corrosion, resistance to weariness, etc.. The colored contacts must meet the requirements of the standards and specifications in force for the intended application.

An aim of the invention is to obtain electrical circuits comprising conductive tracks or pads, having a Rose-Gold color, visible on the finished product, while retaining, in particular during many connection and disconnection cycles, electrical and mechanical properties suitable for their use as contacts intended to be electrically connected with a connector.

### Summary of the invention

This aim is at least partially achieved with a tape according to claim 1 and a method according to claim 8. Other features, that shall be considered independently of one another or in combination of one or more others, of this tape and of this method are presented in the dependent claims.

In order to provide the electric contact pads with a "Rose Gold" color, compatible with demanding specifications in terms of electrical contact resistance, resistance to climatic tests, resistance to corrosion, resistance to weariness, etc., they are covered with at least one metallic layer composed of a gold-copper alloy with a specific copper concentration and a particular thickness, deposited with the help of an electrodeposition process.

### Brief description of the drawings

Other characteristics, purposes and advantages of the above-mentioned tape and method will appear on reading the detailed description which follows, and with reference to the appended drawings, given by way of non-limiting examples and in which:
[Fig. 1] schematically shows in perspective a smart card comprising an example of a module with an electrical circuit manufactured from a tape according to the invention;
[Fig. 2] schematically shows a top view of a portion of a tape according to the invention;
[Fig. 3] shows schematically in section, an example of stacked layers as can be obtained with the method according to the invention;
[Fig. 4a] to [Fig. 4k] schematically represent steps of an example of implementation of the method according to the invention.

### Detailed Description

An example of disclosure of an electrical circuit manufactured from a tape according to the invention is described below. This example is taken in the field of the smart card, but the person skilled in the art will be able, without involving inventiveness, to transpose this example to other applications of electrical circuits. In particular, the invention is particularly advantageous in all cases where the use of pink colored conductive contacts or tracks can bring aesthetic added value (e.g. for connectors of SD memory cards or for connectors of USB keys).

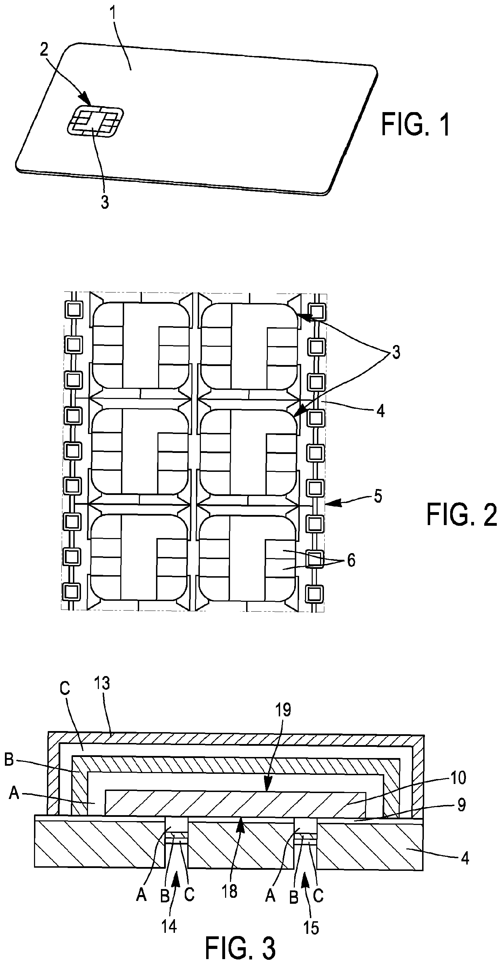

As illustrated in Fig. 1, a smart card 1 comprises for example a module 2 with a connector 3. The module 2 is generally made in the form of a separate element cut out from a tape. This element is inserted into a cavity formed in the card 1. This element comprises a generally flexible substrate 4 (see FIG. 2) of PET, glass-epoxy, etc. on which is made the connector 3, to which is subsequently connected a chip (not shown).

Fig. 2 illustrates an example of an electrical circuit portion. This electrical circuit portion is a printed circuit 5, with six connectors 3. Each connector 3 comprises eight electrical contact pads 6 (a connector 3 is essentially a module 2 without a chip, without the connections between the chip and the contact pads 6, and without an encapsulation resin for protecting the chip and the connections).

A schematic cross-section of an example of a multilayer structure forming a tape for manufacturing the connector 3 is shown in Figure 3. This multilayer structure comprises the substrate 4, an adhesive layer 9, an electrically conductive sheet 10 (made of copper or of a copper alloy for example), and a stack of more or less numerous layers A, B, and / or C, as well as a gold-copper layer 13.

The electrically conductive sheet 10 has an internal face 18 facing the dielectric substrate 4 and an external face 19 opposite this internal face 18. The internal face 18 appears at the bottom of blind holes 14. Blind holes 14 are intended to establish an electrical connection with a chip possibly housed in a cavity 15. The external face 19 corresponds to the contact surfaces intended to establish an electrical connection with another connector. The layers deposited A, B, C on the internal 18 and external 19 faces are not necessarily of the same type and of the same thickness.

The table below illustrates possible layer stacks:

| Electrically conductive sheet 10 | A | B | C | 13 |
|---|---|---|---|---|
| Cu | Ni | | Au (flash) | Au-Cu |
| Cu | Ni | Ni alloy | Au (flash) | Au-Cu |
| Cu | Shiny Ni | Ni alloy | Au (flash) | Au-Cu |
| Cu | Ni | Shiny Ni | Au (flash) | Au-Cu |
| Cu | Ni alloy | | Au (flash) | Au-Cu |
| Cu | Shiny Cu | Ni | Au (flash) | Au-Cu |
| Cu | Cu-Sn alloy | | Au (flash) | Au-Cu |

The presence of a shiny layer underneath the gold-copper alloy layer 13 results in an upper surface with a brighter appearance and a more intense pink color. This shiny underlayer can be obtained for example by electroplating copper and/or nickel and/or a nickel alloy on the electrically conductive sheet 10, which may already be made of copper or a copper alloy. Alternatively, the shiny appearance can be obtained by polishing and/or electropolishing processes carried out on at least one underlying layer chosen from the list comprising copper, nickel, nickel alloy and copper-tin alloy.

The gold layer C is optional. When deposited, the gold layer C is in the form of a "flash", that is to say electrodeposited with a thickness between 0 nanometers and 15 nanometers.

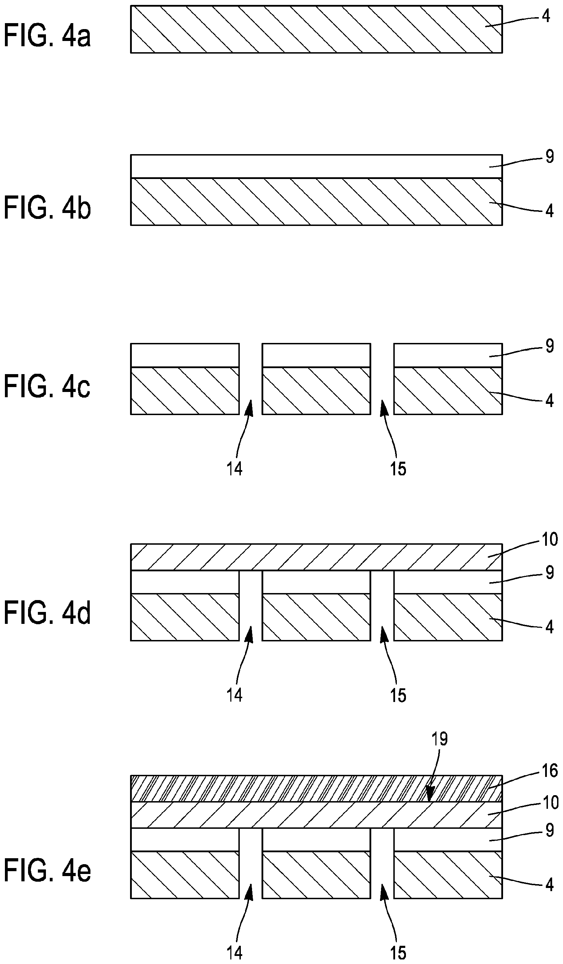

Figures 4a to 4k schematically illustrate the steps of an example of method for manufacturing a tape as shown in Fig. 2.

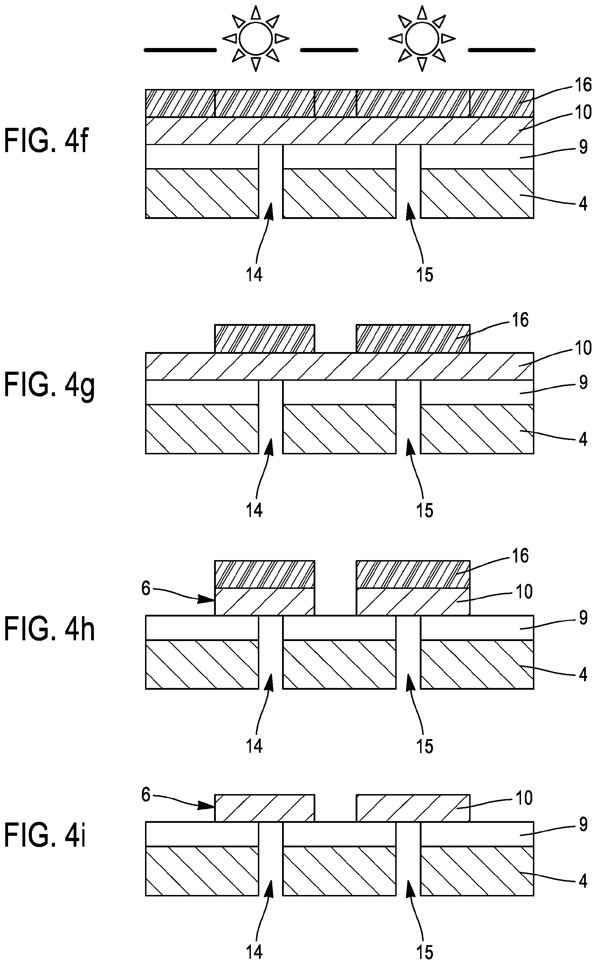

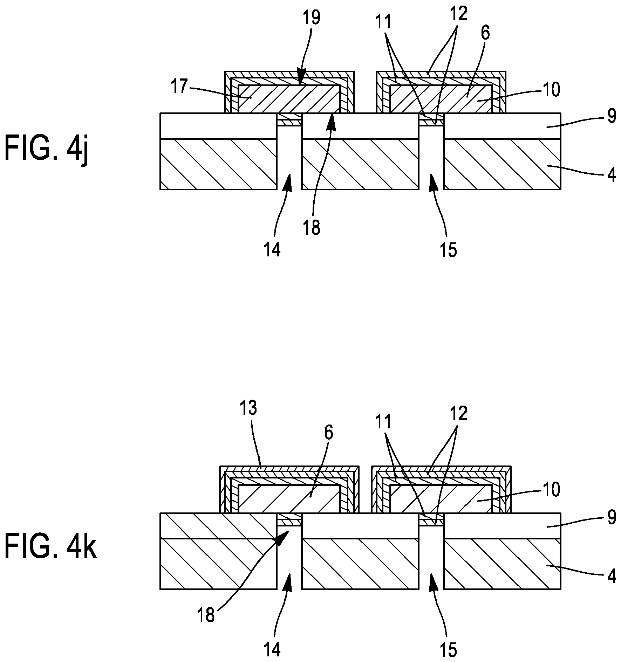

These steps, which can be carried out through a reel-to-reel process, include:
- providing a dielectric substrate 4 (Fig. 4a), for instance the dielectric substrate is made of epoxy-glass, or polyimide, or PET, etc.;
- coating a face of the substrate 4 with an adhesive layer 9 (FIG. 4b);
- punching the substrate 4 with the adhesive layer 9 so as to make holes 14 and possibly a cavity 15 in which a chip can be accommodated at a later stage (FIG. 4c);
- Co-laminating the substrate 4 provided with the adhesive layer 9 with a sheet of electrically conductive material 10 (such as a copper sheet for example), heating the complex thus obtained to achieve a thermal crosslinking of the adhesive layer 9, and deoxidizing the complex thus obtained (Fig. 4d); holes 14 are now blind holes 14;
- laminating a dry photosensitive film 16 (Fig. 4e) on the external face 19 of the electrically conductive sheet 10;
- exposing the photosensitive film 16 through a mask (Fig. 4f),
- developing photosensitive film 16 (Fig. 4g);
- etching of the electrically conductive sheet 10 in the areas not protected by the photosensitive film 16, to define conductive tracks and / or contact pads 6 (FIG. 4h),
- removing the photosensitive film 16 (Fig. 4i);
- electrodepositing conductive layers over at least some of the tracks and / or of some of the contact pads 6 obtained after etching the electrically conductive sheet 10; this electrodeposition can be carried out in one or more steps to form a stack of layers as described above in connection with Figure 3. According to the invention this stack
   comprises a nickel layer 11 and a gold layer 12 (FIG. 4j); for instance, a nickel layer11 is deposited with a thickness of 2 micrometers on the external face 19 and with a thickness of 5 micrometers on the internal face 18; and a gold layer 12 is deposited with a thickness of less than 15 nanometers on the external face 19 and with a thickness of 0.3 micrometers on the internal face 18;
- electrodepositing a gold-copper layer 13 to form a surface layer having a gold-pink color (FIG. 4k); for instance, the copper-gold layer 13 is deposited with a thickness of 0.1 micrometers or more, on the external face 19. According to the invention the copper content in the layer 13 of gold-copper alloy is between 10 and 20% Wt.

The internal face 18 can be protected, for example by selective masking, during at least the deposition of the copper-gold layer 13 (that is to say, the face intended not to be visible on the finished product in not covered by the copper-gold layer 13). Only a layer of gold 12 and / or a layer 11 of nickel and / or of another alloy cover the internal face 18 in the blind holes 14. Therefore, the packaging process remains unchanged for connecting the chip compared to standard processes.

The electrodeposition of the gold-copper layer 13 to form a Rose-Gold surface layer is to be carried out by a specific deposition of a two components alloy, with plating baths of electrolyte containing:
∘ A cyanide complex of gold, for instance the cyanide complex of gold is KAu(CN)₂ or KAu(CN)₄.
∘ A cyanide complex of copper, for instance the cyanide complex of copper is K₃Cu(CN)₄.

For example, the gold concentration in the plating bath is comprised between 0.6 and 1.0 gram per liter and the copper concentration in the plating bath is comprised between 0.6 and 0.8 gram per liter. The bath has a pH comprised between 11 and 13. The temperature of the bath is controlled between 50 and 60°C. The current density and the speed of the tape in the plating baths are adjusted as a function of the available lengths of the plating cells in order to obtain the targeted thicknesses, knowing that the cathodic yield is of the order of 5 to 15 mg / minute. Advantageously, the electro-deposition bath, during the copper-gold alloy deposition, does not comprise any other metallic compound (based on zinc, nickel, silver, or other).

Colors of gold are usually calibrated according to the Swiss standard"1-5N", which ranges from specific pale yellow to pink gold alloys. The process disclosed above makes it possible to obtain a pink color outside of this range, i.e. a color which would be 5N++ (i.e. a more intense pink color). The whole surface of the contact pads 6 is Rose-Gold colored. Alternatively, using mask and/or etching techniques make possible to color only a portion for this surface (e.g. for logos).

The product performances can be summarized in following table:

| Product features to be characterized in particular in view of banking or ID applications | Product obtained by the process described above |
|---|---|
| Color | Rose-Gold |
| Appearance | Mat or Semi-Bright (Depending on copper or nickel layer) |
| Contact resistance measurement (CRM) of the finished product (prior to ageing) | < 500mOhms |
| Contact resistance measurement (CRM) of the product resulting from standard test under neutral salt spray during 24 hours | < 500 mOhms |
| | ISO 10373 compliance |
| Surface aspect after standard test under neutral salt spray ( 5%NaCl), during 96 hours (According to ISO 9227 standard tests) | < 20pits/cm² |
| Surface aspect after standard test under mixed flowing | < 10pits/cm² |
| 2 Gas (H₂S/SO₂), during 10 days, with H₂S = 100 ± 20 ppb & SO₂ = 500 ± 100 ppb | |
| According to NF 60068-2-60 (Method 1) | |
| Contact resistance measurement (CRM) of the product resulting from standard test under hot humidity | CRM < 500mOhms |
| 85°C, HR85%, 500 hours | |

Further, the visual aspect of the gold-copper layer 13 after the climatic tests mentioned in the table above can be improved with a top surface protection. For instance, such protection can be obtained through the immersion of the metallic surface into a solution containing a thiol compound (1-dodecanethiol for example).

Alternatively to the method described above, a lead-frame technology can be implemented for manufacturing a tape. Then, the gold-copper layer 13 can be plated on a conductive layer 10, prior or after the co-lamination of the conductive layer 10 with the dielectric substrate 4.

## Claims

1. A tape for manufacturing an electrical circuit (5) with electrical contact pads (6), comprising:
- a flexible dielectric substrate (4),
- a copper foil (10) covering at least partially the dielectric substrate (4), the copper foil (10) having an internal face (18) facing the dielectric substrate (4), and an external face (19) opposite the internal face (18),
- an intermediate layer comprising at least a nickel-based layer (11) covering at least partially the external face (19) of the copper foil (10),
wherein a gold-copper alloy layer (13) is deposited on the intermediate layer, and wherein the intermediate layer comprises a thin gold layer (12) having a thickness less or equal to 15 nanometers, and covering at least partially the nickel-based layer (11), the gold-copper alloy layer (13) being deposited on top of this thin gold layer (12),
**characterized in that** the copper content in the gold-copper alloy layer (13) is comprised between 10% Wt and 20% Wt.

2. A tape according to claim 1, wherein the layer of gold-copper alloy layer (13) has a thickness greater or equal to 0.1 micrometer.

3. A tape according to any one of the preceding claims, comprising blind holes (14) formed by the copper foil (10) at least partially covering holes made through the dielectric substrate (4), these blind holes (14) having a bottom surface, corresponding to the internal face (18) of the copper foil (10), this bottom surface being not covered by a gold-copper alloy layer (13).

4. A tape according to any one of the preceding claims, wherein the gold-copper alloy layer (13) is at least partially covered by a protection layer comprising a thiol compound.

5. A tape according to any one of the preceding claims, comprising a shiny layer underneath the gold-copper alloy layer (13).

6. A tape according to claim 5, wherein the shiny layer is an electropolished layer of a metal selected in the list consisting of copper, copper-tin alloy, nickel and nickel alloy.

7. A tape according to claim 1, wherein the copper foil is provided with a shiny surface, wherein the shiny surface is polished or electropolished.

8. A method for manufacturing an electrical circuit (5), comprising
- providing a tape comprising a flexible dielectric substrate (4) supporting electrically conductive pads (6), and
- plating the pads (6) with an intermediate layer comprising at least a nickel-based layer (11),
- electro-depositing on the intermediate layer, from an electro-deposition solution, a layer (13) of gold-copper alloy, the intermediate layer comprising a thin gold layer (12) having a thickness less or equal to 15 nanometers, and covering at least partially the nickel-based layer (11), the gold-copper alloy layer (13) being deposited on top of this thin gold layer (12),
**characterized in that** the copper content in the gold-copper alloy layer (13) is comprised between 10% Wt and 20% Wt, thereby producing the tape according to any one of the preceding claims.

9. A method according to claim 8, wherein said electro-deposition solution comprises a gold cyanide complex and a copper cyanide complex.

10. A method according to claim 8, wherein said electro-deposition solution does not comprise a cyanide compound.

11. A method according to any one of claims 8 to 10, comprising electroplating a shiny layer made of a metal selected in the list consisting of copper, nickel and nickel alloy, underneath the gold-copper alloy layer (13).

12. A method according to any one of claims 8 to 10, comprising polishing or electropolishing the copper foil from which are made the electrically conductive pads (6), prior to the electro-deposition of the gold-copper alloy (13).

## Patentansprüche

1. Band zum Herstellen einer elektrischen Schaltung (5) mit elektrischen Kontaktflächen (6), umfassend:
- ein flexibles dielektrisches Substrat (4),
- eine Kupferfolie (10), die das dielektrische Substrat (4) mindestens teilweise bedeckt, wobei die Kupferfolie (10) eine zu dem dielektrischen Substrat (4) weisende interne Fläche (18) und eine externe Fläche (19) gegenüberliegend der internen Fläche (18) aufweist,
- eine Zwischenschicht, umfassend mindestens eine Schicht auf Nickelbasis (11), die die externe Fläche (19) der Kupferfolie (10) mindestens teilweise bedeckt,
wobei eine Gold-Kupfer-Legierungsschicht (13) auf der Zwischenschicht abgeschieden wird und wobei die Zwischenschicht eine dünne Goldschicht (12) umfasst, die eine Dicke von weniger als oder gleich 15 Nanometer aufweist und die Schicht auf Nickelbasis (11) mindestens teilweise bedeckt, wobei die Gold-Kupfer-Legierungsschicht (13) oben auf dieser dünnen Goldschicht (12) abgeschieden wird,
**dadurch gekennzeichnet, dass** der Kupfergehalt in der Gold-Kupfer-Legierungsschicht (13) zwischen 10 Gew.-% und 20 Gew.-% beträgt.

2. Band nach Anspruch 1, wobei die Gold-Kupfer-Legierungsschicht (13) eine Dicke größer als oder gleich 0,1 Mikrometer aufweist.

3. Band nach einem der vorhergehenden Ansprüche, umfassend durch die Kupferfolie (10) gebildete Blindlöcher (14), die durch das dielektrische Substrat (4) hergestellte Löcher mindestens teilweise bedeckt, wobei diese Blindlöcher (14) eine mit der internen Fläche (18) der Kupferfolie (10) korrespondierende Bodenoberfläche aufweisen, wobei diese Bodenoberfläche nicht durch eine Gold-Kupfer-Legierungsschicht (13) bedeckt ist.

4. Band nach einem der vorhergehenden Ansprüche, wobei die Gold-Kupfer-Legierungsschicht (13) durch eine Schutzschicht mindestens teilweise bedeckt ist, die eine Thiolverbindung umfasst.

5. Band nach einem der vorhergehenden Ansprüche, umfassend eine glänzende Schicht unterhalb der Gold-Kupfer-Legierungsschicht (13).

6. Band nach Anspruch 5, wobei die glänzende Schicht eine elektropolierte Schicht aus einem Metall ist, ausgewählt aus der Liste, bestehend aus Kupfer, Kupfer-ZinnLegierung, Nickel und Nickel-Legierung.

7. Band nach Anspruch 1,
wobei die Kupferfolie mit einer glänzenden Oberfläche versehen ist, wobei die glänzende Oberfläche poliert oder elektropoliert ist.

8. Verfahren zum Herstellen einer elektrischen Schaltung (5), umfassend
- Bereitstellen eines Bands, umfassend ein flexibles dielektrisches Substrat (4), das elektrisch leitende Flächen (6) trägt, und
- Plattieren der Flächen (6) mit einer Zwischenschicht, die mindestens eine Schicht auf Nickelbasis (11) umfasst,
- Elektroabscheiden, auf der Zwischenschicht, aus einer Elektroabscheidungslösung, einer Schicht (13) von Gold-Kupfer-Legierung, wobei die Zwischenschicht eine dünne Goldschicht (12) umfasst, die eine Dicke von weniger als oder gleich 15 Nanometer aufweist und die Schicht auf Nickelbasis (11) mindestens teilweise bedeckt, wobei die Gold-Kupfer-Legierungsschicht (13) oben auf dieser dünnen Goldschicht (12) abgeschieden wird,
**dadurch gekennzeichnet, dass** der Kupfergehalt in der Gold-Kupfer-Legierungsschicht (13) zwischen 10 Gew.-% und 20 Gew.-% beträgt, wodurch das Band nach einem der vorhergehenden Ansprüche produziert wird.

9. Verfahren nach Anspruch 8, wobei die Elektroabscheidungslösung einen Goldzyanidkomplex und einen Kupferzyanidkomplex umfasst.

10. Verfahren nach Anspruch 8, wobei die Elektroabscheidungslösung keine Zyanidverbindung umfasst.

11. Verfahren nach einem der Ansprüche 8 bis 10, umfassend Elektroplattieren einer glänzenden Schicht, hergestellt aus einem Metall, ausgewählt aus der Liste, bestehend aus Kupfer, Nickel und Nickel-Legierung, unterhalb der Gold-Kupfer-Legierungsschicht (13).

12. Verfahren nach einem der Ansprüche 8 bis 10, umfassend Polieren oder Elektropolieren der Kupferfolie, aus der die elektrisch leitenden Flächen (6) hergestellt werden, vor der Elektroabscheidung der Gold-Kupfer-Legierung (13).

## Revendications

1. Ruban destiné à la fabrication d'un circuit électrique (5) avec des plots de contact électrique (6), comprenant :
- un substrat diélectrique souple (4),
- une feuille de cuivre (10) recouvrant au moins partiellement le substrat diélectrique (4), la feuille de cuivre (10) ayant une face interne (18) tournée vers le substrat diélectrique (4), et une face externe (19) à l'opposé de la face interne (18),
- une couche intermédiaire comprenant au moins une couche à base de nickel (11) recouvrant au moins partiellement la face externe (19) de la feuille de cuivre (10),
dans lequel une couche d'alliage or-cuivre (13) est déposée sur la couche intermédiaire, et
dans lequel la couche intermédiaire comprend une mince couche d'or (12) ayant une épaisseur inférieure ou égale à 15 nanomètres, et recouvrant au moins partiellement la couche à base de nickel (11), la couche d'alliage or-cuivre (13) étant déposée au-dessus de cette mince couche d'or (12),
**caractérisé en ce que** la teneur en cuivre dans la couche d'alliage or-cuivre (13) est comprise entre 10 % en poids et 20 % en poids.

2. Ruban selon la revendication 1, dans lequel la couche d'alliage or-cuivre (13) a une épaisseur supérieure ou égale à 0,1 micromètre.

3. Ruban selon l'une quelconque des revendications précédentes, comprenant des trous borgnes (14) formés par la feuille de cuivre (10) recouvrant au moins partiellement des trous ménagés à travers le substrat diélectrique (4), ces trous borgnes (14) ayant une surface inférieure, correspondant à la face interne (18) de la feuille de cuivre (10), cette surface inférieure n'étant pas recouverte par une couche d'alliage or-cuivre (13).

4. Ruban selon l'une quelconque des revendications précédentes, dans lequel la couche d'alliage or-cuivre (13) est au moins partiellement recouverte par une couche de protection comprenant un composé de thiol.

5. Ruban selon l'une quelconque des revendications précédentes, comprenant une couche brillante en dessous de la couche d'alliage or-cuivre (13).

6. Ruban selon la revendication 5, dans lequel la couche brillante est une couche électropolie d'un métal choisi dans la liste constituée par le cuivre, un alliage cuivreétain, le nickel et un alliage de nickel.

7. Ruban selon la revendication 1, dans lequel la feuille de cuivre est pourvue d'une surface brillante, dans lequel la surface brillante est polie ou électropolie.

8. Procédé destiné à la fabrication d'un circuit électrique (5), comprenant
- l'obtention d'un ruban comprenant un substrat diélectrique souple (4) supportant des plots électriquement conducteurs (6), et
- le placage des plots (6) avec une couche intermédiaire comprenant au moins une couche à base de nickel (11),
- le dépôt électrolytique sur la couche intermédiaire, à partir d'une solution de dépôt électrolytique, d'une couche (13) d'alliage or-cuivre, la couche intermédiaire comprenant une mince couche d'or (12) ayant une épaisseur inférieure ou égale à 15 nanomètres, et recouvrant au moins partiellement la couche à base de nickel (11), la couche d'alliage or-cuivre (13) étant déposée au-dessus de cette mince couche d'or (12),
**caractérisé en ce que** la teneur en cuivre dans la couche d'alliage or-cuivre (13) est comprise entre 10 % en poids et 20 % en poids, pour produire ainsi le ruban selon l'une quelconque des revendications précédentes.

9. Procédé selon la revendication 8, dans lequel ladite solution de dépôt électrolytique comprend un complexe de cyanure d'or et un complexe de cyanure de cuivre.

10. Procédé selon la revendication 8, dans lequel ladite solution de dépôt électrolytique ne comprend pas de composé de cyanure.

11. Procédé selon l'une quelconque des revendications 8 à 10, comprenant la galvanoplastie d'une couche brillante faite d'un métal choisi dans la liste constituée par le cuivre, le nickel et un alliage de nickel, en dessous de la couche d'alliage or-cuivre (13).

12. Procédé selon l'une quelconque des revendications 8 à 10, comprenant le polissage ou l'électropolissage de la feuille de cuivre à partir de laquelle sont fabriqués les plots électriquement conducteurs (6), avant le dépôt électrolytique de l'alliage or-cuivre (13).
